# EUROPÄISCHE PATENTSCHRIFT

(11) **EP 3 712 066 B1**
(45) Veröffentlichungstag und Bekanntmachung des Hinweises auf die Patenterteilung: **16.03.2022**
(21) Anmeldenummer: 20164219.6
(22) Anmeldetag: 19.03.2020
(51) Int. Cl.: B64D 11/00, B64D 11/02, B64D 11/04

(54) **VIELZWECKANSCHLUSS FÜR EIN FLUGZEUGMONUMENT SOWIE FLUGZEUGMONUMENT, FLUGZEUGBEREICH UND FLUGZEUG MIT VIELZWECKANSCHLUSS**
AIRCRAFT MONUMENT AND A MULTI-PURPOSE CONNECTION FOR AN AIRCRAFT MONUMENT, AIRCRAFT AREA AND AIRCRAFT WITH A MULTI-PURPOSE CONNECTION
RACCORDEMENT À USAGES MULTIPLES POUR UN MODULE DANS UN AÉRONEF AINSI QUE MODULE DANS UN AÉRONEF, ZONE D'AÉRONEF ET AÉRONEF POURVU DE RACCORDEMENT À USAGES MULTIPLES

(30) Priorität: 22.03.2019 DE 102019107359
(43) Veröffentlichungstag der Anmeldung: 23.09.2020
(73) Patentinhaber: Airbus Operations GmbH, 21129 Hamburg (DE)
(72) Erfinder: Le Polotec, Christian, 21129 Hamburg (DE); Bahns, Tammo, 21075 Hamburg (DE)

(56) Entgegenhaltungen:
- DE-A1-102004 035 854
- DE-A1-102005 007 058
- DE-B3-102011 088 068
- US-B1- 9 217 528

## Beschreibung

Die Erfindung betrifft einen Vielzweckanschluss für ein Flugzeugmonument sowie ein Flugzeugmonument, Flugzeugbereich und Flugzeug mit solch einem Vielzweckanschluss. Insbesondere betrifft die Erfindung einen Vielzweckanschluss zum Verbinden einer Vielzahl von Leitungen eines Flugzeugmonuments sowie ein Flugzeugmonument mit mindestens einem Vielzweckanschluss, einen Flugzeugbereich mit mindestens einem Vielzweckanschluss und/oder mindestens einem Flugzeugmonument und ein Flugzeug mit mindestens einem Vielzweckanschluss und/oder mindestens einem Flugzeugmonument und/oder mindestens einem Flugzeugbereich, wobei der Vielzweckanschluss eine Systemanschlussplatte aufweist, die zwischen einer Schliessstellung und einer Offenstellung bewegt werden kann, wobei mindestens ein Leitungsadapter einer Monumentanschlussplatte mit einem entsprechenden Leitungsadapter der Systemanschlussplatte wirksam verbunden bzw. gelöst werden kann.

Für den Anschluss von Monumenten, wie zum Beispiel einer Bordküche oder einer Flugzeugtoilette, müssen verschiedene Leitungen des Monuments an Systemleitungen angeschlossen werden. So benötigt eine Flugzeugtoilette beispielsweise einen Anschluss an eine Stromversorgung, Frischwasserversorgung und Abwassersystem. Die DE 10 2005 007 058 A1 schlägt hierzu vor, Leitungsanschlüsse, die für ein Monument zur Verfügung gestellt werden müssen, als System-Port zusammenzufassen. Solche System-Ports haben im Fußbodenraster des Flugzeugs eine vorgegebene Position. Die Stellplatzflexibilität des Monuments wird durch flexible Zuleitungen erreicht, sodass das Monument ohne eine Trennung der Systemanschlussinstallation im Rahmen der System-Port-Flexibilität verschoben werden kann. Die Flexibilität der Zuleitungen kann durch in Leitungslängsrichtung veränderbare Längen der Leitungen erfolgen.

Der Erfindung liegt die Aufgabe zugrunde, einen Vielzweckanschluss für ein Monument, ein Flugzeugmonument, einen Flugzeugbereich und ein Flugzeug mit solch einem Vielzweckanschluss bereitzustellen, der bei möglichst flexibler Anordnung des Flugzeugmonuments einen einfachen Anschluss von Leitungen des Flugzeugmonuments ermöglicht.

Diese Aufgabe wird durch einen Vielzweckanschluss mit den Merkmalen des Anspruchs 1, durch ein Flugzeugmonument mit den Merkmalen des Anspruchs 6, durch einen Flugzeugbereich mit den Merkmalen des Anspruchs 12 und einem Flugzeug mit den Merkmalen des Anspruchs 15 gelöst.

Gemäß einem ersten Aspekt zum besseren Verständnis der vorliegenden Offenbarung umfasst ein Vielzweckanschluss zum Verbinden einer Vielzahl von Leitungen eines Flugzeugmonuments eine Grundhalterung, eine Systemanschlussplatte, und eine Monumentanschlussplatte. Die Systemanschlussplatte ist dazu eingerichtet, eine Vielzahl von ersten Leitungsadaptern aufzunehmen, und die Monumentanschlussplatte ist dazu eingerichtet ist, mindestens einen zweiten Leitungsadapter aufzunehmen.

Die ersten Leitungsadapter der Systemanschlussplatte können an eine Systemleitung angeschlossen werden. Bei einer Systemleitung handelt es sich um eine in einem Flugzeug installierte Leitung, beispielsweise Stromleitung, Frischwasserleitung, Abwasserleitung (Schmutzwasser und/oder Grauwasser), Vakuumleitung, Kühlmittelleitung, Frischluftleitung, Abluftleitung, etc., an die ein oder mehrere Monumente und/oder andere Verbraucher angeschlossen werden können. So kann die Systemleitung in Längsrichtung des Flugzeugs installiert sein, und mehrere Monumente/Verbraucher können an verschiedenen Stellen innerhalb des Flugzeugs daran angeschlossen sein. Beispielsweise kann in die Systemleitung ein T-Stück integriert sein, das einen zugehörigen Leitungsadapter der Systemanschlussplatte mit der (Haupt-) Systemleitung verbindet.

Der Vielzweckanschluss umfasst ferner eine Bewegungseinrichtung, die dazu eingerichtet ist, die Systemanschlussplatte relativ zu der Grundhalterung und der Monumentanschlussplatte zwischen einer Offenstellung und einer Schliessstellung zu bewegen. Mit anderen Worten wird die Systemanschlussplatte relativ zu der Grundhalterung und auch relativ zu der Monumentanschlussplatte bewegt. Beispielsweise wird die Systemanschlussplatte in einem Raum zwischen der Grundhalterung und der Monumentanschlussplatte bewegt. In der Schliessstellung kann sich die Systemanschlussplatte näher an der Monumentanschlussplatte befinden, während sie sich in der Offenstellung näher an der Grundhalterung befindet.

In der Schliessstellung ist die Systemanschlussplatte relativ zu der Monumentanschlussplatte so angeordnet, dass der mindestens eine zweite Leitungsadapter der Monumentanschlussplatte mit einem zugehörigen ersten Leitungsadapter der Systemanschlussplatte wirksam verbunden ist. Eine wirksame Verbindung eines ersten Leitungsadapter mit einem zweiten Leitungsadapter schließt eine mechanische Verbindung der beiden Leitungsadapter ein. Beispielsweise steht ein erster Leitungsadapter mit einem zugehörigen zweiten Leitungsadapter in Eingriff. In der Offenstellung der Systemanschlussplatte sind die Vielzahl von ersten Leitungsadaptern und der mindestens eine zweite Leitungsadapter voneinander gelöst. Mit anderen Worten dienen die ersten und zweiten Leitungsadapter als Kupplungen, die miteinander verbunden werden können und zwei Leitungsabschnitte (systemseitig und monumentseitig) miteinander verbinden.

Hierfür ist die Vielzahl der ersten Leitungsadapter an oder in der Systemanschlussplatte an jeweils vorgegebenen Positionen angeordnet. Diese Positionen können standardisiert für eine Vielzahl von Vielzweckanschlüssen immer gleich sein. Entsprechend befindet sich auch der mindestens eine zweite Leitungsadapter an oder in der Monumentanschlussplatte an einer vorgegebenen Position, die einer Position des zugehörigen ersten Leitungsadapters der Systemanschlussplatte entspricht. Im Fall einer Vielzahl von zweiten Leitungsadaptern befindet sich jeder zweite Leitungsadapter an einer jeweiligen vorgegebenen Position an oder in der Monumentanschlussplatte. Bewegt sich nun die Systemanschlussplatte in die Schliessstellung, werden die Vielzahl von ersten Leitungsadaptern jeweils auf einen zugeordneten zweiten Leitungsadapter in der Monumentanschlussplatte zu bewegt, bis diese wirksam verbunden sind.

Dadurch kann mit einer einzelnen Bewegung der Systemanschlussplatte der mindestens eine zweite Leitungsadapter (und damit auch eine Vielzahl von zweiten Leitungsadaptern) an eine entsprechende Systemleitung angeschlossen werden. Dies ermöglicht den Anschluss aller Leitungen für ein Monument durch eine einzelne Bewegung der Systemanschlussplatte und ebenso das Lösen sämtlicher Leitungen für das Monument von den Systemleitungen. Somit kann ein Monument vorgefertigt werden, wobei die Monumentanschlussplatte des Vielzweckanschlusses bereits an dem Monument montiert werden kann. Nach Einbau des Monuments in das Flugzeug (beispielsweise in der Final Assembly Line - FAL) muss nur noch die Systemanschlussplatte mittels der Bewegungseinrichtung in die Schliessstellung gebracht werden und das Monument ist vollständig an die zugehörigen Systemleitungen angeschlossen. Insbesondere gegenüber den herkömmlichen flexiblen Anschlussleitungen bietet sich hier der Vorteil, dass der Einbau des Vielzweckanschlusses (sowohl der Grundhalterung mit Systemanschlussplatte an die Flugzeugstruktur als auch die Monumentanschlussplatte an das Monument) automatisiert werden kann. Beispielsweise ist es für Roboter einfacher, formstabile Bauteile zu bewegen und zu montieren, während flexible Leitungen für Roboter schwieriger zu handhaben sind. Dadurch ermöglicht der hier beschriebene Vielzweckanschluss eine schnelle, einfache und kostengünstige Montage.

Die Systemanschlussplatte des Vielzweckanschlusses kann alle ersten Leitungsadapter umfassen und auch an alle verfügbaren Systemleitungen angeschlossen sein, während die Monumentanschlussplatte nur die zweiten Leitungsadapter aufweist, die für das spezielle Monument notwendig sind. Die nicht benötigten ersten Leitungsadapter in der Systemanschlussplatte können beispielsweise mit Verschlusskappen oder ähnlichem verschlossen werden. Dadurch kann im späteren Betrieb des Flugzeugs ein Monument leicht ausgetauscht werden, beispielsweise eine zusätzliche Toilette anstatt einer Bordküche eingebaut werden oder umgekehrt, ohne ein langwieriges Verlegen von Systemleitungen zu dem Monument zu erfordern.

Ebenso ermöglicht der Vielzweckanschluss, dass die Monumentanschlussplatte für einen speziellen Monumenttyp ausgelegt ist. Benötigt das spezielle Monument beispielsweise keinen Abwasseranschluss oder Vakuumanschluss (oder sonstigen Anschluss), können entweder die Positionen für die zugehörigen zweiten Leitungsadapter leer bleiben oder die Monumentanschlussplatte wird an dieser Stelle vollständig ausgespart mit anderen Worten kann eine Monumentanschlussplatte beispielsweise nur so groß sein, um die notwendigen zweiten Leitungsadapter darin anzubringen. Eine entsprechende Gruppierung der Leitungsadapter (sowohl in der Systemanschlussplatte als auch der Monumentanschlussplatte) erlaubt eine Reduzierung der Größe der Monumentanschlussplatte und somit eine Gewichtsersparnis.

In einer Ausgestaltungsvariante umfasst die Bewegungseinrichtung eine Gewindespindel und eine Mutter, die auf die Gewindespindel aufgeschraubt ist und mit der Systemanschlussplatte verbunden ist. Eine Drehung der Gewindespindel bedingt eine Bewegung der Mutter entlang einer Längsachse der Gewindespindel. Aufgrund der Verbindung der Mutter mit der Systemanschlussplatte wird auch die Systemanschlussplatte entlang der Längsachse der Gewindespindel bewegt. Durch eine Drehung der Gewindespindel lässt sich somit eine Bewegung der Systemanschlussplatte zwischen der Offenstellung und Schliessstellung bewirken.

Ferner kann die Gewindespindel dazu eingerichtet sein, ein rotierendes Werkzeug daran anzuschließen, um die Drehung der Gewindespindel vorzunehmen. Beispielsweise kann die Gewindespindel an einem zugänglichen Ende einen festen Mutternkopf, einen Imbus-Anschluss, eine Öffnung oder Aussparung mit vordefinierter Form (zum Beispiel einen Schlitz, ein Kreuz oder eine Vielzahl von Bohrungen), oder andere Form aufweisen, die mit einem korrespondierenden Werkzeug gekoppelt werden kann, um eine Rotation von dem Werkzeug auf die Gewindespindel zu übertragen.

Alternativ oder zusätzlich kann die Bewegungseinrichtung einen drehbar gelagerten Hebel umfassen, der mit der Systemanschlussplatte in Wirkverbindung steht. Dabei kann eine Drehung des Hebels eine Bewegung der Systemanschlussplatte zwischen der Offenstellung und Schliessstellung bewirken. Beispielsweise kann der Hebel drehbar an der Systemanschlussplatte oder der Grundhalterung befestigt sein und einen Nocken aufweisen, der bei Drehung des Hebels einen Abstand zwischen der Systemanschlussplatte und der Grundhalterung vergrößert bzw. verkleinert. Alternativ oder zusätzlich kann der Hebel auch ein Langloch aufweisen, in dem ein Stift gleitend angeordnet ist, der wiederum an der Grundhalterung oder der Systemanschlussplatte befestigt ist (je nachdem ob der Hebel drehbar an der Systemanschlussplatte bzw. der Grundhalterung befestigt ist). Durch Drehung des Hebels liegt der Stift an einer Seite des Langlochs an und wird gezwungen, in Längsrichtung des Langlochs zu gleiten. Dadurch kann die Grundhalterung bzw. Systemanschlussplatte, an der der Stift befestigt ist, bewegt werden. Ebenfalls alternativ kann der Hebel auch mit der Gewindestange verbunden sein, um diese zu drehen. Dadurch kann auf den Einsatz eines Werkzeugs verzichtet werden.

In einer weiteren Ausgestaltungsvariante kann der Vielzweckanschluss ferner mindestens einen Führungsstift umfassen, der an einem von der Systemanschlussplatte und der Grundhalterung befestigt ist und an dem anderen von der Systemanschlussplatte und der Grundhalterung gleitend gelagert ist. Der Führungsstift kann insbesondere so angeordnet sein, dass eine Gleitrichtung des Stifts der Bewegungsrichtung der Systemanschlussplatte zwischen der Schliessstellung und der Offenstellung entspricht. Mit anderen Worten führt der mindestens eine Führungsstift die Systemanschlussplatte in ihrer Bewegung zwischen der Schliessstellung und der Offenstellung.

Ferner kann der mindestens eine Führungsstift auch in Richtung der Monumentanschlussplatte verlängert sein. Dies erlaubt ein Aufsetzen der Monumentanschlussplatte auf den mindestens einen Führungsstift, wodurch die Monumentanschlussplatte und die Systemanschlussplatte parallel zur Ebene der Monumentanschlussplatte bzw. Systemanschlussplatte zu einander fixiert sind. Dies erleichtert ein Anschließen der ersten und zweiten Leitungsadapter während der Bewegung der Systemanschlussplatte in die Schliessstellung. Ferner kann auch die Monumentanschlussplatte in die richtige Position relativ zur Systemanschlussplatte gebracht werden. So kann der Führungsstift zwischen Systemanschlussplatte und Monumentanschlussplatte eine Länge aufweisen, die der maximalen Bewegung der Systemanschlussplatte entspricht, um sicher zu stellen, dass die Bewegung der Systemanschlussplatte zum sicheren Verbinden der ersten und zweiten Leitungsadapter ausreicht.

Durch die Verwendung mehrerer Führungsstifte und insbesondere durch eine Anordnung dieser Führungsstifte und zugehöriger Gleitlager in einer asymmetrischen Weise kann die Systemanschlussplatte in Bezug auf die Grundhalterung und/oder die Monumentanschlussplatte in Bezug auf die Systemanschlussplatte jeweils nur in einer bestimmten Position montiert werden. Dadurch wird vermieden, dass erste und zweite Leitungsadapter nicht zueinander passen, wenn die Systemanschlussplatte in die Schliessstellung bewegt wird.

In noch einer weiteren Ausgestaltungsvariante kann jeder Leitungsadapter (sowohl erster als auch zweiter Leitungsadapter) mindestens eines der Folgenden umfassen: eine Führungsfläche, eine Dichtung und einen elektrischen Kontakt. Mit anderen Worten kann jeder Leitungsadapter eine oder mehrere Führungsflächen, eine oder mehrere Dichtungen und/oder einen oder mehrere elektrische Kontakte umfassen. Eine Führungsfläche kann entsprechend einem Führungsstift so angeordnet sein, dass ein korrespondierender Leitungsadapter während der Bewegung der Systemanschlussplatte zwischen der Offenstellung und der Schliessstellung geführt wird und somit die Systemanschlussplatte geführt wird. Dabei ist es möglich, die Systemanschlussplatte nur durch die Leitungsadapter oder zusätzlich durch mindestens einen Führungsstift in die richtige Schliessstellung zu führen. So können beispielsweise erste und zweite Leitungsadapter konische Führungsflächen aufweisen, an denen insbesondere der erste Kontakt zwischen den beiden Leitungsadaptern stattfindet, wenn sich die Systemanschlussplatte von der Offenstellung in die Schliessstellung bewegt.

Eine Dichtung ist insbesondere bei Luft-, Vakuum- und Wasserleitungen vorzusehen, um eine zuverlässige fluidische Verbindung zwischen den an die entsprechenden Leitungsadapter angeschlossenen Leitungen zu bewirken und eine Leckage zwischen den beiden Leitungsadaptern zu verhindern. Selbstverständlich kann auch mindestens ein Leitungsadapter zum Verbinden elektrischer Leitungen oder anderer Leitungen mit einer Dichtung versehen sein. Dies verhindert ein Eindringen von Feuchtigkeit, (Kondens-) Wasser oder anderen Flüssigkeiten in die durch die Leitungsadapter gekoppelten Leitungen.

Insbesondere für elektrische Leitungen (Stromversorgung, Signalleitungen, etc.) kann sowohl der erste als auch der zweite Leitungsadapter mindestens einen elektrischen Kontakt aufweisen. Um die Kontakte der beiden zugehörigen Leitungsadapter richtig miteinander zu verbinden, ist es vorteilhaft, wenn der erste und der zweite Leitungsadapter in der Systemanschlussplatte bzw. Monumentanschlussplatte nur in einer bestimmten Position eingebaut werden können. Beispielsweise kann der Leitungsadapter sowie die Systemanschlussplatte bzw. Monumentanschlussplatte asymmetrische und korrespondierende Formen aufweisen, sodass der Leitungsadapter in die zugehörige Platte nur in einer Richtung eingesetzt und dort befestigt werden kann.

In einer anderen Ausgestaltungsvariante kann der Vielzweckanschluss einen Signalgeber umfassen, der dazu eingerichtet ist, ein Kontaktsignal zu erzeugen, wenn sich die Systemanschlussplatte in der Offenstellung und/oder Schliessstellung befindet. Beispielsweise können an entsprechenden Positionen an der Systemanschlussplatte und der Monumentanschlussplatte (oder zusätzlich oder alternativ an der Grundhalterung) Kontakte angeordnet sein, die miteinander in Wirkverbindung treten, wenn die Systemanschlussplatte in der Schliessstellung (bzw. in Bezug auf die Grundhalterung in der Offenstellung) ist. In einer einfachen Ausgestaltung ist ein Schalter an der Systemanschlussplatte, Monumentanschlussplatte und/oder Grundhalterung vorgesehen, der durch eine Berührung mit einer der Systemanschlussplatte, Monumentanschlussplatte und/oder Grundhalterung geschlossen oder geöffnet wird. Alternativ oder zusätzlich kann ein elektrischer Kontakt an der Monumentanschlussplatte oder der Grundhalterung vorgesehen sein, der durch einen entsprechenden elektrischen Kontakt an der Systemanschlussplatte berührt wird, wenn letztere sich in der Schliessstellung (bzw. Offenstellung) befindet. In jedem Fall kann das durch den Signalgeber erzeugte Kontaktsignal während des Einbaus des Monuments (in der FAL) und/oder im Cockpit abgerufen werden, um den sicheren Anschluss des Monuments über den Vielzweckanschluss direkt nach dem Einbau des Monuments und/oder im späteren Betrieb des Flugzeugs zu überprüfen.

Gemäß einem zweiten Aspekt zum besseren Verständnis der vorliegenden Offenbarung umfasst ein Flugzeugmonument mindestens eine Monumentanschlussplatte eines Vielzweckanschlusses gemäß dem ersten Aspekt oder einer seiner Ausgestaltungsvarianten und mindestens eine Leitung. Selbstverständlich kann das Flugzeugmonument auch mindestens einen Vielzweckanschluss gemäß dem ersten Aspekt oder einer seiner Ausgestaltungsvariante und mindestens eine Leitung umfassen. Jeweils eine Leitung der mindestens einen Leitung ist an dem mindestens einen zweiten Leitungsadapter der Monumentanschlussplatte angeschlossen und verbindet den zugehörigen zweiten Leitungsadapter mit einer in dem Monument angeordneten Einrichtung. Benötigt das Monument nur eine einzelne Leitung zum Anschluss der in dem Monument angeordneten Einrichtung, sieht der Vielzweckanschluss an seiner Monumentanschlussplatte auch nur einen einzelnen zweiten Leitungsadapter vor. Bei einer Vielzahl von Leitungen des Monuments, die an Systemleitungen angeschlossen werden müssen, sind in der Monumentanschlussplatte des Vielzweckanschlusses eine entsprechende Anzahl von zweiten Leitungsadaptern vorgesehen, die jeweils mit einer zugehörigen Leitung des Monuments verbunden sind.

In einer Ausgestaltungsvariante kann das Flugzeugmonument ferner mindestens eine Halteeinrichtung umfassen, die dazu eingerichtet ist, die Monumentanschlussplatte des Vielzweckanschlusses an variablen Positionen zu befestigen. Die Halteeinrichtung kann beispielsweise in Form einer Schiene an dem Monument vorgesehen sein. Die Monumentanschlussplatte kann dabei an jeder beliebigen Position entlang einer Längsrichtung der Schiene befestigt werden. Hierfür kann die Monumentanschlussplatte einen Abschnitt aufweisen, der auf den Querschnitt der Schiene aufgesetzt werden kann und somit auf der Schiene in deren Längsrichtung gleitend befestigt ist. Mittels eines Befestigers kann die Monumentanschlussplatte auch in Längsrichtung der Schiene fixiert werden.

Alternativ oder zusätzlich kann die Schiene Öffnungen aufweisen, die in vordefinierten Abständen in der Schiene vorgesehen sind, wobei eine Befestigungseinrichtung der Monumentanschlussplatte mit mindestens einer solchen Öffnung zusammenwirken kann (beispielsweise über einen in die Öffnung einführbaren Stift), um die Monumentanschlussplatte an der entsprechenden Position der Schiene in mehreren Freiheitsgraden (und insbesondere in Längsrichtung der Schiene) zu fixieren.

Die Halteeinrichtung (Schiene) des Flugzeugmonuments kann so angeordnet sein, dass sie im eingebauten Zustand des Monuments in einem Flugzeug im Wesentlichen parallel zur Flugzeuglängsachse verläuft. In dieser Richtung verlaufen für gewöhnlich auch die Systemleitungen entlang der Flugzeugstruktur, sodass auch der Vielzweckanschluss (insbesondere die Grundhalterung und Systemanschlussplatte) entlang dieser Richtung an einer bestimmten Stelle im Flugzeug positioniert ist. Die Monumentanschlussplatte kann durch die Halteeinrichtung schnell an die entsprechende Position der Grundhalterung und Systemanschlussplatte des Vielzweckanschlusses angepasst werden, wodurch sich das Monument schnell installieren und insbesondere einfach an die Systemleitungen des Flugzeugs anschließen lässt.

In einer weiteren Ausgestaltungsvariante kann das Flugzeugmonument eine Justiereinrichtung umfassen, die dazu eingerichtet ist, an variablen Positionen an der Halteeinrichtung befestigt zu werden, und ferner dazu eingerichtet ist, die Monumentanschlussplatte an der Justiereinrichtung an variablen Positionen relativ zu der Justiereinrichtung zu befestigen. Beispielsweise kann die Justiereinrichtung in Form einer Schiene vorgesehen sein, die kürzer ist als die Halteeinrichtung. Die Justiereinrichtung kann ebenfalls Öffnungen zum Befestigen der Monumentanschlussplatte aufweisen, die jedoch ein kürzeres Raster (einen kleineren Abstand) aufweisen als Öffnungen an der Halteeinrichtung. So kann in einer speziellen Ausgestaltungsvariante die Justiereinrichtung mithilfe der Öffnungen in der Halteeinrichtung grob ausgerichtet und an einen Bereich, in dem die Systemanschlussplatte des Vielzweckanschlusses sein wird, angepasst werden, während die Lage der Monumentanschlussplatte mittels der Justiereinrichtung so bestimmt wird, dass sie mit der der Systemanschlussplatte korrespondiert. Dann kann die Monumentanschlussplatte auch an der Justiereinrichtung befestigt werden.

Alternativ oder zusätzlich kann die Halteeinrichtung und/oder Justiereinrichtung auch so ausgestaltet sein, dass die Monumentanschlussplatte darauf gleitend befestigt werden kann. So lässt sich die Monumentanschlussplatte beispielsweise auf der Halteeinrichtung bzw. Justiereinrichtung anbringen, wobei die Monumentanschlussplatte noch in Längsrichtung der Halteeinrichtung bzw. Justiereinrichtung verschiebbar ist. Erst durch Betätigen einer Schließeinrichtung (beispielsweise Schnellverschluss, Bolzen, etc.) wird die Monumentanschlussplatte an der Halteeinrichtung bzw. Justiereinrichtung fixiert. Das gleiche Prinzip kann auch auf eine Fixierung der Justiereinrichtung an der Halteeinrichtung angewandt werden.

In einer anderen Ausgestaltungsvariante kann die Monumentanschlussplatte des mindestens einen Vielzweckanschlusses parallel zu einer Rückwand des Monuments angeordnet sein. Mit anderen Worten ist die Hauptebene der Monumentanschlussplatte im Wesentlichen vertikal (Z-Achse) und in Flugzeuglängsrichtung (X-Achse; nach Einbau des Monuments im Flugzeug) ausgerichtet. Dadurch wird nicht nur Raum in der Tiefenrichtung des Monuments (Querrichtung des Flugzeugs; Y-Achse) gewonnen. Es kann sich auch kein Wasser auf der Monumentanschlussplatte ansammeln, wodurch eventuell Leitungsadapter und Leitungen (insbesondere elektrische Leitungen) geschädigt werden können. Da der Vielzweckanschluss für gewöhnlich zwischen dem Flugzeugrumpf und der Rückseite des Monuments angeordnet ist, kann sich hier Kondenswasser bilden, was jedoch von der vertikalen Monumentanschlussplatte ablaufen kann. Ebenso wird beim Öffnen des Vielzweckanschlusses (Bewegung der Systemanschlussplatte in die Offenstellung) verhindert, dass Wasser aus einem der Leitungsadapter auf eine (elektrische) Leitung und/oder einen Leitungsadapter einer elektrischen Leitung tropft und dort eindringen kann.

In einer weiteren Ausgestaltungsvariante kann das Flugzeugmonument ferner eine Grundhalterung und eine Systemanschlussplatte eines weiteren Vielzweckanschlusses umfassen, also zumindest Teile eines zweiten Vielzweckanschlusses. Bei dem weiteren Vielzweckanschluss kann es sich um einen zusätzlichen Vielzweckanschluss handeln, der zusätzlich zum Anschließen von Leitungen des Monuments vorgesehen ist. Beispielsweise kann die Grundhalterung und die Systemanschlussplatte des weiteren Vielzweckanschlusses an oder in einer Seitenwand des Monuments angeordnet sein. Alternativ kann das Flugzeugmonument die Monumentanschlussplatte des weiteren Vielzweckanschlusses umfassen, wobei die Monumentanschlussplatte an oder in einer Seitenwand des Monuments angeordnet ist. Mit anderen Worten befindet sich ein Teil des weiteren Vielzweckanschlusses, der erste oder zweite Leitungsadapter aufweist, in einer Seitenwand des Flugzeugmonuments.

So kann das Flugzeugmonument ferner mindestens eine Leitung aufweisen, wobei jeweils eine Leitung an dem mindestens einen Leitungsadapter der Monumentanschlussplatte des weiteren Vielzweckanschlusses angeschlossen ist und den zugehörigen Leitungsadapter mit einem Leitungsadapter der Monumentanschlussplatte des Vielzweckanschlusses verbindet. Mit anderen Worten verbindet die mindestens eine Leitung den (ursprünglich ersten) Vielzweckanschluss zum Anschließen des Flugzeugmonuments an Systemleitungen mit dem weiteren Vielzweckanschluss. Dabei ist jeweils eine Leitung zwischen zwei entsprechenden Leitungsadaptern vorgesehen. Dies ermöglicht eine Weiterleitung der Systemleitung(en) des Flugzeugs von dem (Haupt-) Vielzweckanschluss zu dem weiteren Vielzweckanschluss.

Durch Anordnen eines weiteren Flugzeugmonuments neben dem (ersten) Flugzeugmonument kann das weitere Flugzeugmonument ebenfalls an die Systemleitung(en) des Flugzeugs angeschlossen werden. Hierfür weist das weitere Flugzeugmonument entweder eine Monumentanschlussplatte oder eine Grundhalterung und Systemanschlussplatte eines Vielzweckanschlusses auf, um mit dem entsprechenden Gegenstück des weiteren Vielzweckanschlusses des (ersten) Flugzeugmonuments verbunden zu werden. So kann durch die Bewegungseinrichtung des weiteren Vielzweckanschlusses die die Systemanschlussplatte des weiteren Vielzweckanschlusses schnell mit der zugehörigen Monumentanschlussplatte an dem anderen Flugzeugmonument verbunden werden. Dadurch kann eine Verbindung zwischen den beiden Flugzeugmonumenten über den weiteren Vielzweckanschluss schnell und einfach hergestellt werden. Ferner muss nur ein Flugzeugmonument eine Verbindung zu den Systemleitungen des Flugzeugs aufweisen. Der Einbau des weiteren Flugzeugmonuments ist damit noch einfacher und schneller.

Gemäß einem dritten Aspekt zum besseren Verständnis der vorliegenden Offenbarung umfasst ein Flugzeugbereich mindestens einen Vielzweckanschluss gemäß dem ersten Aspekt, und/oder mindestens ein Flugzeugmonument gemäß dem zweiten Aspekt. Dabei kann beispielsweise die Grundhalterung des Vielzweckanschlusses an mindestens einem Primärstrukturbauteil des Flugzeugbereichs in einer relativ zu dem Primärstrukturbauteil festen Position angebracht sein. Mit anderen Worten wird die Grundhalterung des Vielzweckanschlusses an dem Primärstrukturbauteil fest angeordnet. Dadurch lassen sich Systemleitungen des Flugzeugs an den ersten Leitungsadaptern der Systemanschlussplatte an einer vorgegebenen Position anschließen, unabhängig von dem Einbau und der späteren exakten Position eines Flugzeugmonuments. Dies erlaubt es, Flugzeuge mit Vielzweckanschlüssen an bestimmten Positionen zu versehen, ohne dass das endgültige Layout der Flugzeugkabine bekannt ist. Auch sind die zu verlegenden Systemleitungen im Flugzeug immer gleich und unabhängig von dem späteren Kabinenlayout.

In einer Ausgestaltungsvariante umfasst der Flugzeugbereich ferner mindestens ein Fußbodenelement. Die Grundhalterung und/oder die Systemanschlussplatte des Vielzweckanschlusses kann dabei unabhängig von dem Fußbodenelement in dem Flugzeugbereich angeordnet sein. Mit anderen Worten erfolgt der Einbau der Grundhalterung und/oder der Systemanschlussplatte (des systemseitigen Teils des Vielzweckanschlusses) unabhängig von dem Einbau der Fußbodenelemente in dem Flugzeugbereich.

Alternativ kann die Grundhalterung und/oder die Systemanschlussplatte des Vielzweckanschlusses in das Fußbodenelement integriert sein. Auch dadurch lässt sich eine vorgegebene Position der Systemanschlussplatte (des systemseitigen Teils des Vielzweckanschlusses) bewerkstelligen. Systemleitungen können dabei leicht von der Unterseite des Fußbodenelements an die ersten Leitungsadapter der Systemanschlussplatte angeschlossen werden.

In noch einer weiteren Ausgestaltungsvariante weist der Flugzeugbereich ein Flugzeugmonument mit einer parallel zu einer Rückwand des Flugzeugmonuments angeordneten Monumentanschlussplatte auf. Die Monumentanschlussplatte kann dabei so an dem Flugzeugmonument angeordnet sein, dass der mindestens eine Leitungsadapter der Monumentanschlussplatte und die Vielzahl von Leitungsadaptern der Systemanschlussplatte des Vielzweckanschlusses in ihrer Lage korrespondieren und die Offenstellung der Systemanschlussplatte einnehmen, wenn das Flugzeugmonument in dem Flugzeugbereich angeordnet und befestigt ist. Mit anderen Worten wird mit dem Einbau und Befestigen des Flugzeugmonuments die Monumentanschlussplatte (die bereits im Vorfeld an der Rückseite des Flugzeugmonuments vorgesehen werden kann) in eine korrespondierende Lage zur Systemanschlussplatte gebracht. Alternativ oder zusätzlich kann eine Halteeinrichtung und/oder Justiereinrichtung, wie sie oben beschrieben ist, verwendet werden, um die Monumentanschlussplatte in die korrekte korrespondierende Lage zur Systemanschlussplatte zu bringen. Auf jeden Fall lassen sich Monumente bereits mit den Monumentanschlussplatten und somit bereits mit fest verlegten Leitungen innerhalb des Monuments produzieren, bevor diese in der FAL in das Flugzeug eingebracht werden. Die so erzielte zeitliche Entkopplung der Leitungsverlegung für ein Monument beschleunigt den Einbau des Flugzeugmonuments in der FAL.

Gemäß einem vierten Aspekt zum besseren Verständnis der vorliegenden Offenbarung umfasst ein Flugzeug mindestens einen Vielzweckanschluss gemäß dem ersten Aspekt, und/oder mindestens ein Flugzeugmonument gemäß dem zweiten Aspekt, und/oder mindestens einen Flugzeugbereich gemäß dem dritten Aspekt oder einer der jeweiligen zugehörigen Ausgestaltungsvarianten.

Die oben beschriebenen Aspekte, Ausgestaltungen und Varianten können selbstverständlich kombiniert werden, ohne dass dies explizit beschrieben ist. Jede der beschriebenen Ausgestaltungsvarianten ist somit optional zu jedem der Aspekte, Ausgestaltungen und Varianten oder bereits Kombinationen davon. Die vorliegende Offenbarung ist nicht auf die einzelnen Ausgestaltungen und Ausgestaltungsvarianten in der beschriebenen Reihenfolge oder einer bestimmten Kombination der Aspekte und Ausgestaltungsvarianten beschränkt.

Eine bevorzugte Ausführungsform der Erfindung wird nun anhand der beigefügten schematischen Zeichnung näher erläutert, wobei
- Figuren 1 bis 3: schematisch eine perspektivische Ansicht eines Vielzweckanschlusses in einer Schliessstellung sowie Seitenansichten des Vielzweckanschlusses in einer Offenstellung und Schliessstellung zeigt;
- Figur 4: schematisch eine perspektivische Ansicht eines Flugzeugmonuments mit einem Vielzweckanschluss zeigt;
- Figur 5: schematisch perspektivische Ansichten eines Flugzeugmonuments mit einem Vielzweckanschluss in verschiedenen Positionen des Flugzeugmonuments relativ zu dem Vielzweckanschluss zeigt;
- Figur 6: schematisch eine perspektivische Ansicht eines Flugzeugbereichs mit zwei Monumenten und einem Vielzweckanschluss zeigt;
- Figur 7: schematisch eine perspektivische Ansicht eines Flugzeugbereichs mit zwei unterschiedlichen Monumenten und einem Vielzweckanschluss zeigt;
- Figur 8: schematisch eine Aufsicht eines Flugzeugbereichs mit zwei Monumenten und einem Vielzweckanschluss zeigt;
- Figur 9: schematisch eine perspektivische Ansicht eines Flugzeugbereichs mit einem Monument und zwei Vielzweckanschlüssen zeigt;
- Figur 10: schematisch eine weitere perspektivische Ansicht eines Flugzeugbereichs mit einem Monument und zwei Vielzweckanschlüssen zeigt; und
- Figur 11: schematisch ein Flugzeug mit einem Flugzeugbereich mit einem Vielzweckanschluss zeigt.

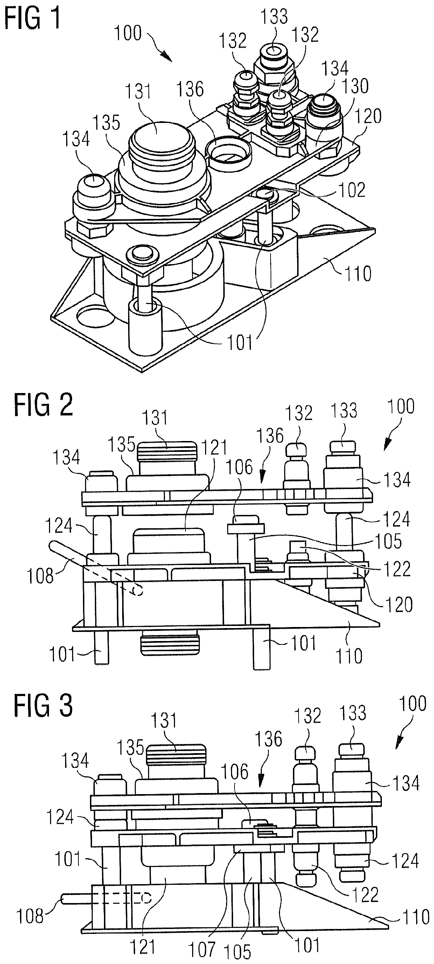

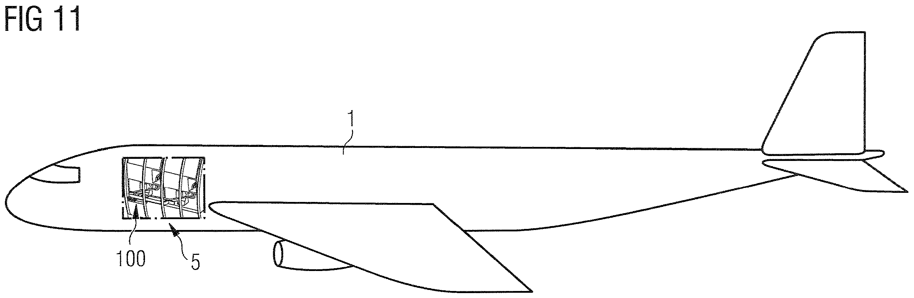

In Figur 1 sind schematisch perspektivische Ansichten eines Vielzweckanschlusses 100 gezeigt und in den Figuren 2 bzw. 3 ist der Vielzweckanschluss 100 in einer Seitenansicht in einer Offenstellung (Figur 2) bzw. Schliessstellung (Figur 3) gezeigt. Der Vielzweckanschluss 100 umfasst zumindest eine Grundhalterung 110, die dazu eingerichtet sein kann, an einer Primärstruktur 2 oder anderem Strukturbauteil eines Flugzeugs 1 (siehe Figur 11) befestigt zu werden. In der Grundhalterung 110 sind Führungsstifte 101 gleitend gelagert. Ferner ist eine Bewegungseinrichtung in Form einer Gewindespindel 105 vorgesehen, die noch näher erläutert wird. Alternativ oder zusätzlich zu der Gewindespindel 105 kann eine Bewegungseinrichtung in Form eines Hebels 108 (Figuren 2 und 3) an der Grundhalterung 110 drehbar gelagert sein.

Der Vielzweckanschluss 100 umfasst ferner eine Systemanschlussplatte 120, die dazu eingerichtet ist, eine Vielzahl von ersten Leitungsadaptern 121 - 124 aufzunehmen. Die ersten Leitungsadapter 121 - 124 sind beispielsweise in Öffnungen in der Systemanschlussplatte 120 eingesetzt und dort befestigt. So kann jeder der ersten Leitungsadapter 121 - 124 dem Anschluss einer jeweiligen Systemleitung (nicht dargestellt) dienen, wobei die Systemleitung(en) in den Figuren 1 bis 3 von unten an den jeweiligen ersten Leitungsadapter 121 -124 angeschlossen wird. Beispielsweise kann der Leitungsadapter 121 zum Anschluss an eine Abwasserleitung des Flugzeugs 1, der Leitungsadapter 122 zum Anschluss an eine Vakuumleitungen des Flugzeugs 1, der Leitungsadapter 123 zum Anschluss an eine Frischwasserleitung des Flugzeugs 1, und der Leitungsadapter 124 an eine Stromleitung des Flugzeugs 1 verwendet werden. Selbstverständlich können andere Leitungen an die Adapter angeschlossen werden.

Der Vielzweckanschluss 100 umfasst zudem eine Monumentanschlussplatte 130, die dazu eingerichtet ist, eine Vielzahl von zweiten Leitungsadaptern 131 - 134 aufzunehmen. Jeder zweite Leitungsadapter 131 - 134 kann in einer entsprechenden Öffnung in der Monumentanschlussplatte 130 eingesetzt und daran mit einem Befestiger 135 montiert werden. Hierfür kann der zweite Leitungsadapter 131 - 134 einen Flansch oder ähnlichen Vorsprung (nicht sichtbar) auf der dem Befestiger 135 gegenüberliegenden Seite der Monumentanschlussplatte 130 aufweisen, wodurch der zweite Leitungsadapter 131 - 134 an der Monumentanschlussplatte 130 festgeklemmt werden kann. Das gleiche Befestigungsprinzip kann für die ersten Leitungsadapter 121 - 124 angewandt werden, die in den Figuren 1 und 3 verdeckt sind.

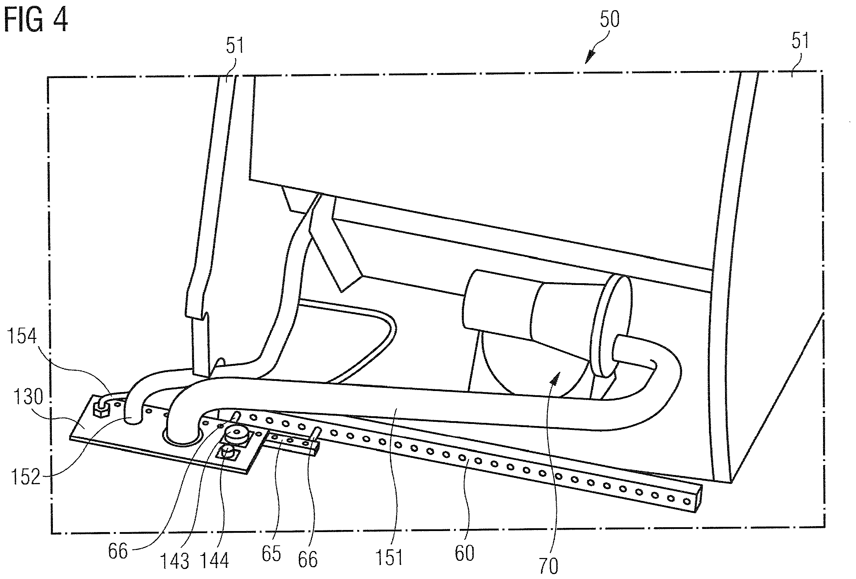

Der Vielzweckanschluss 100 bietet ferner die Möglichkeit, an die zweiten Leitungsadapter 131 - 134 der Monumentanschlussplatte 130 jeweils eine Leitung 151, 152, 154 (siehe Figur 4) anzuschließen, die den zugehörigen Leitungsadapter 131 - 134 mit einer in dem Flugzeugmonument 50 angeordneten Einrichtung 70 (siehe Figur 4) verbindet. Die Leitung 151 - 154 wird dabei an den jeweiligen zweiten Leitungsadapter 131 - 134 in den Figuren 1 bis 3 von oben angeschlossen.

Die Bewegungseinrichtung 105, 108 ist dazu eingerichtet, die Systemanschlussplatte 120 relativ zu der Grundhalterung 110 und relativ zu der Monumentanschlussplatte 130 zwischen einer in Figur 2 dargestellten Offenstellung und einer in den Figuren 1 und 3 dargestellten Schliessstellung zu bewegen. Hierfür kann die Systemanschlussplatte 120 mithilfe der Führungsstifte 101 auf einer bestimmten Bahn zwischen der Grundhalterung 110 und der Monumentanschlussplatte 130 bewegt werden. In der Schliessstellung wird jeder zweite Leitungsadapter 131 - 134 der Monumentanschlussplatte 130 mit einem zugehörigen ersten Leitungsadapter 121 - 124 der Systemanschlussplatte wirksam verbunden. Mit anderen Worten findet in der Schliessstellung eine paarweise Kopplung der ersten und zweiten Leitungsadapter 121 - 124, 131 - 134 statt.

Bei der paarweisen Kopplung der ersten und zweiten Leitungsadapter 121 - 124, 131 - 134 werden die dazugehörigen Leitungen (nicht dargestellte Systemleitungen und Monumentleitungen 151 - 154) ebenfalls miteinander verbunden. Je nach Leitungstyp wird dabei eine fluidische Verbindung oder elektrische Verbindung zwischen den Leitungen und durch die Leitungsadapter 121 - 124, 131 - 134 hindurch hergestellt. In mindestens einem der Leitungsadapter121 - 124, 131 - 134 für eine fluidische Verbindung kann dabei ein Ventil integriert sein, sodass bei der Trennung der beiden Leitungsadapter121 - 124, 131 - 134 die Leitung (Systemleitung und/oder Monumentleitung 151 - 154) verschlossen wird. Dadurch wird ein Austreten eines Fluids an dem nun geöffneten (freiliegenden) Leitungsadapter 121 - 124, 131 - 134 verhindert.

In Figur 1 ist erkennbar, dass zur Materialeinsparung die Grundhalterung 110, Systemanschlussplatte 120 und Monumentanschlussplatte 130 bestimmte Aussparungen oder Geometrie aufweisen können. Beispielsweise ist die in Figur 1 nach vorne zeigende Ecke der Monumentanschlussplatte 130 ausgespart, da hier kein Leitungsadapter 131 - 134 vorgesehen ist.

In Figur 3 ist ferner zu sehen, dass die Bewegungseinrichtung in Form einer Gewindespindel 105 auch eine Mutter 107 umfasst, die auf die Gewindespindel 105 aufgeschraubt ist und mit der Systemanschlussplatte 120 verbunden ist. Durch Drehen der Gewindespindel 105 wird die Mutter 107 entlang einer Axialrichtung der Gewindespindel 105 (in den Figuren 2 und 3 nach oben bzw. unten) bewegt und bewegt somit die Systemanschlussplatte 120 zwischen der Offenstellung in Figur 2 und der Schliessstellung in Figur 3. Zum Drehen der Gewindespindel 105 kann diese eine Kopfmutter 106 oder anderes Element, das mit einem entsprechenden Werkzeug in Eingriff gebracht werden kann, aufweisen. Um ein Werkzeug auf die Kopfmutter 106 aufzusetzen, weist die Monumentanschlussplatte eine Öffnung 136 (siehe auch Figur 1) auf. Dadurch ist ein leichter Zugang und ein schnelles Betätigen der Bewegungseinrichtung in Form der Gewindespindel 105 möglich.

Alternativ zu der Gewindespindel 105 kann an der Grundhalterung 110 (oder alternativ an der Systemanschlussplatte 120) ein Hebel 108 drehbar angeordnet sein. Der Hebel 108 kann über einen Nocken (nicht dargestellt) oder ähnliches Bauteil mit der Systemanschlussplatte 120 (bzw. der Grundhalterung 110) mechanisch gekoppelt sein, wobei eine Drehbewegung des Hebels 108 und somit des Nockens die Systemanschlussplatte 120 (bzw. die Grundhalterung 110) in ihrer Lage verändert. Durch die Führungsstifte 101 wird die Systemanschlussplatte 120 (bzw. die Grundhalterung 110) zwischen der in Figur 2 dargestellten Offenstellung und der in Figur 3 dargestellten Schliessstellung linear bewegt.

Auch die ersten und zweiten Leitungsadapter 121 - 124, 131 - 134 können der Führung des Systemanschlussplatte 120 in die Schliessstellung dienen. Hierfür können die ersten Leitungsadapter 121 - 124 in ihrer Längserstreckung (in den Figuren 2 und 3 nach oben bzw. unten; vertikal) länger ausgestaltet sein, wodurch sie Führungsflächen aufweisen. Entsprechend können auch die zweiten Leitungsadapter 131 - 134 eine bestimmte Längserstreckung aufweisen, in die die ersten Leitungsadapter 121 - 124 eingeführt werden können. Dadurch wird ein sicheres Koppeln der Leitungsadapter 121 - 124, 131 - 134 und somit der daran angeschlossenen Leitungen gewährleistet.

Schließlich kann der Vielzweckanschluss 100 einen Signalgeber 102 umfassen, der dazu eingerichtet ist, ein Kontaktsignal zu erzeugen. Beispielsweise kann der Signalgeber 102 auf einem Führungsstift 101 angeordnet sein oder darin integriert sein. Sobald der Kopf des Führungsstifts die Monumentanschlussplatte 130 oder ein daran speziell angeordnetes Bauteil (nicht dargestellt) kontaktiert, kann der Signalgeber 102 ein Signal erzeugen, welches angibt, ob sich die Systemanschlussplatte 120 in der Offenstellung oder in der Schliessstellung befindet.

In Figur 4 ist schematisch eine perspektivische Ansicht eines Flugzeugmonuments 50 mit einem Vielzweckanschluss 100 gezeigt. Zur vereinfachten Darstellung ist nur die Monumentanschlussplatte 130 des Vielzweckanschlusses 100 dargestellt. Das Flugzeugmonument 50 umfasst neben der Monumentanschlussplatte 130 mindestens eine Leitung 151 - 154 zum Verbinden jeweils eines zweiten Leitungsadapters 131 - 134 mit einer in dem Flugzeugmonument 50 angeordneten Einrichtung 70. Beispielsweise kann die Leitung 151 eine Abwasserleitung, die Leitung 152 eine Vakuumleitungen und die Leitung 154 eine Frischwasserleitung sein, die jeweils an einem zugehörigen zweiten Leitungsadapter 131, 132 bzw. 134 angeschlossen sind.

Eine Halteeinrichtung 60, hier in Form einer Schiene mit in regelmäßigen Abständen angeordneten Öffnungen, dient der Befestigung der Monumentanschlussplatte 130 an variablen Positionen relativ zu dem Flugzeugmonument 50. Die Monumentanschlussplatte 130 kann beispielsweise direkt an der Halteeinrichtung 60 befestigt werden, zum Beispiel durch Verwendung von einem oder mehreren Bolzen, Stiften, etc., der/die mit einer oder mehreren Öffnungen der Halteeinrichtung 60 in Eingriff gebracht werden kann/können. Alternativ kann die Monumentanschlussplatte 130 an einer Justiereinrichtung 65 befestigt sein, die wiederum über entsprechende Befestiger 66 an der Halteeinrichtung 60 montiert ist. Die Justiereinrichtung 65 kann ebenfalls in Form einer Schiene mit daran vorgesehenen Öffnungen implementiert sein. Der Abstand der Öffnungen in der Justiereinrichtung 65 kann dabei kleiner sein als der der Öffnungen in der Halteeinrichtung 60. Somit lässt sich die Monumentanschlussplatte 130 an einer beliebigen Position relativ zu dem Monument 50 anbringen und schnell in diese Position verschieben. Hierzu zählen auch Positionen außerhalb des Monuments 50, insbesondere außerhalb von Seitenwänden 51 des Monuments 50.

Ferner ist in Figur 4 dargestellt, dass zweite Leitungsadapter 133, 134 mit Abdeckkappen oder Verschlusskappen 143, 144 versehen sein können. Alternativ oder zusätzlich können die zweiten Leitungsadapter 133, 134 auch jeweils ein Ventil umfassen, das den Leitungsadapter 133, 134 verschließt und nur im gekoppelten Zustand mit einem ersten Leitungsadapter 123, 124 selbständig geöffnet ist. Somit können die zweiten Leitungsadapter 133, 134 verschlossen werden, falls keine zugehörige Leitung bei dem Monument 50 benötigt werden. Alternativ kann der zweite Leitungsadapter 133, 134 auch weggelassen werden, wobei die ersten Leitungsadapter 123, 124 mit Abdeckkappen oder Verschlusskappen (nicht dargestellt) oder alternativ oder zusätzlich mit einem selbsttätigen Ventil verschlossen werden können. Entsprechend kann auch die Monumentanschlussplatte 130 kleiner dimensioniert werden, falls für das Monument 50 keine Anschlüsse korrespondierend zu den zweiten Leitungsadaptern 133, 134 vorgesehen werden. Dies würde einerseits das Gesamtgewicht eines Vielzweckanschlusses 100 verringern, andererseits erhöht es die Anzahl von unterschiedlichen Monumentanschlussplatten 130 und somit unterschiedlichen Vielzweckanschlüssen 100.

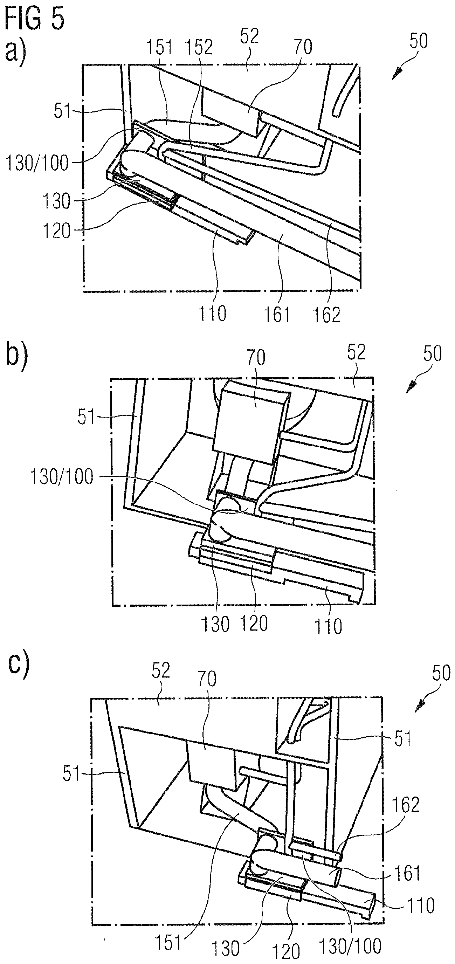

Figur 5 zeigt schematisch perspektivische Ansichten eines Flugzeugmonuments 50 mit einem Vielzweckanschluss 100 in verschiedenen Positionen des Flugzeugmonuments 50 relativ zu dem Vielzweckanschluss 100. Die Grundhalterung 110 des Vielzweckanschlusses 100 ist in dieser Ausgestaltung breiter gehalten als in den Figuren 1 bis 3 gezeigt. Dabei kann die Grundhalterung 110 auch eine Justiereinrichtung 65 (Figur 4) umfassen. Beispielsweise kann die Systemanschlussplatte 120 entlang der Grundhalterung 110 an verschiedenen Stellen angeordnet werden (in Figur 5 in Längsrichtung der Grundhalterung 110).

Wie aus den einzelnen Abbildungen (a) bis (c) der Figur 5 zu sehen ist, kann das Flugzeugmonument 50 relativ zu der Grundhalterung 110 und somit relativ zu dem Vielzweckanschluss 100 verschoben werden. Hierfür ist lediglich die Anordnung der Leitungen 151, 152 entsprechend der Lage des Vielzweckanschlusses 100, insbesondere der Systemanschlussplatte 120, zu verändern. Zum Versetzen des Flugzeugmonuments 50 muss lediglich die Systemanschlussplatte 120 in ihre Offenstellung gebracht werden, also von der Monumentanschlussplatte 130 entkoppelt werden. Anschließend kann das Flugzeugmonument 50 versetzt werden und die Leitungen 151, 152 in dem Flugzeugmonument 50 entsprechend verlegt werden. Schließlich wird die Systemanschlussplatte 120 wieder in ihre Schliessstellung gebracht, und die ersten Leitungsadapter 121 - 124 der Systemanschlussplatte 120 mit den zweiten Leitungsadaptern 131 - 134 der Monumentanschlussplatte 130 wirksam verbunden.

In einer weiteren Ausgestaltung kann senkrecht zur Rückwand 52 des Flugzeugmonuments 50 eine weitere Monumentanschlussplatte 130 oder ein vollständiger Vielzweckanschluss 100 vorgesehen sein, sodass das Monument 50 als geschlossene Einheit hergestellt werden kann und keine Elemente aufweist, die aus einem umbauten Raum des Flugzeugmonument 50 herausragen. Dies ermöglicht gut lagerfähige Monumente 50 und zudem eine einfache Trennung des Flugzeugmonuments 50, durch einfaches Öffnen des Vielzweckanschlusses 100.

Ferner ist in Figur 5 dargestellt, dass mehrere Leitungen zusammengeführt werden können. Beispielsweise kann eine Leitung 161, 162 entlang des Monuments geführt werden, die in eine der Monumentleitungen 151 bzw. 152 mündet. Diese zusätzlichen Monumentleitungen 161, 162 können entweder zu einer anderen Einheit 70 (Verbraucher) in dem gleichen Monument führen oder zu irgendeiner anderen an die Systemleitungen des Flugzeugs anzuschließenden Einheit (nicht dargestellt).

Die in Figur 5 dargestellte Anordnung des Vielzweckanschlusses 100 zeigt, wie die gleiche Systemanschlussplatte 120 des Vielzweckanschlusses 100 verwendet werden kann, um das Monument 50 an verschiedenen Positionen anzuordnen. So ist in Figur 5(a) das Monument 50 mit einer seiner Seitenwände 51 direkt neben dem Vielzweckanschluss 100 angeordnet. Durch Öffnen des Vielzweckanschlusses 100 (Bewegen der Systemanschlussplatte 120 in die Offenstellung) ist das Monument 50 von allen Systemleitungen (in Figur 5 nicht gesondert dargestellt) gelöst und kann verschoben werden.

Verschiedene Positionen des Monuments 50 sind in den Figuren 5 (b) und (c) dargestellt. Hierbei muss lediglich die im Inneren des Monuments 50 verlaufende Leitung 151, 152 entsprechend angepasst werden, um mit der Position des Vielzweckanschlusses 100 (genauer gesagt der Grundhalterung 110 und der Systemanschlussplatte 120) zu korrespondieren. Hierbei können feste (starre) Leitungen 151, 152 im Inneren des Monuments 50 installiert sein. Dies erlaubt eine Leitungsverlegung mit optimal angepassten Leitungslängen. Selbstverständlich können auch flexible Leitungen im Inneren des Monuments 50 vorgesehen sein, wodurch sich die Monumentanschlussplatte 130 ohne größere Umbauten und schnell verschieben lässt.

Ferner ist in Figur 5 eine Implementierungsvariante dargestellt, die einen Anschluss der im Inneren des Monuments 50 verlaufenden Leitungen 151, 152 an den systemseitigen Vielzweckanschluss 100 vereinfacht. Hierfür ist ein weiterer Vielzweckanschluss 100 vorgesehen, der parallel zu einer Rückwand 52 des Monuments 50 (also vertikal) ausgerichtet ist. Mit anderen Worten ist die Monumentanschlussplatte 130 und die Systemanschlussplatte 120 so angeordnet, dass ihre Hauptebenen parallel zu der Rückwand 52 des Monuments 50 ausgerichtet sind. In Figur 5 ist zur vereinfachten Darstellung lediglich die Monumentanschlussplatte 130 dargestellt. Insbesondere in den Figuren 5 (b) und (c) ist zu erkennen, dass zur Befestigung des Vielzweckanschlusses 100, der parallel zur Rückwand 52 des Monuments 50 ausgerichtet ist, eine Halteeinrichtung 53 vorgesehen ist. Der Vielzweckanschluss 100 kann daran in Querrichtung des Monuments 50 (bei in dem Flugzeug 1 eingebautem Monument 50 in Flugzeuglängsrichtung; X-Achse) verschoben werden und auch daran befestigt werden. Die Halteeinrichtung 53 kann auch entsprechend der in Figur 4 dargestellten Halteeinrichtung 60 ausgeführt sein.

Dieser zusätzliche Vielzweckanschluss 100 ermöglicht ein Entfernen des Monuments 50 mit den darin angeordneten Leitungen 151, 152, während die Leitungen 161, 162 nicht verändert werden müssen und somit daran angeschlossene Einrichtungen 70 weiterverwendet werden können. So kann beispielsweise ein Monument 50 eines bestimmten Typs durch ein Monument 50 eines anderen Typs ausgetauscht werden, wie zum Beispiel von einer Bordküche zu einer Flugzeugtoilette oder umgekehrt.

Alternativ zu dem Vielzweckanschluss 100 kann auch nur eine Leitungshalterung vorgesehen sein, ohne einen vollständigen weiteren Vielzweckanschluss 100 zu bilden. Beispielsweise kann eine Monumentanschlussplatte 130 mit oder ohne Leitungsadaptern 131 - 134 zur Befestigung der Leitungen 151, 152 verwendet werden.

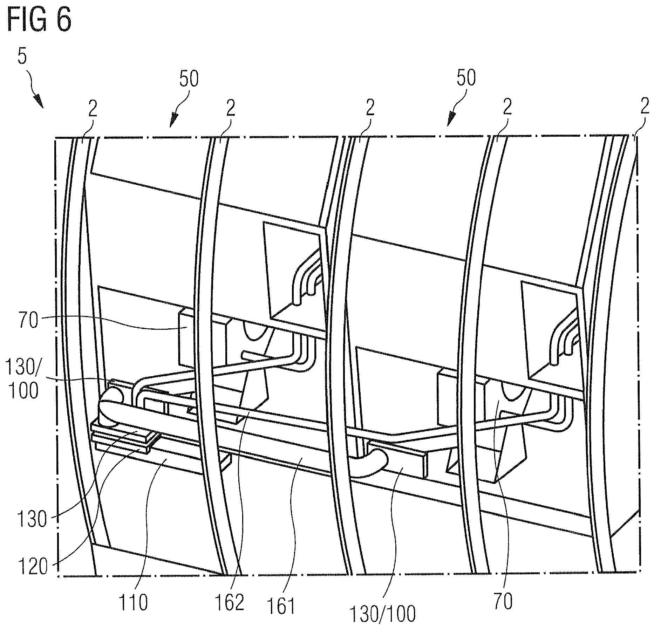

Figur 6 zeigt schematisch eine perspektivische Ansicht eines Flugzeugbereichs 5 mit zwei Monumenten 50 und einem Vielzweckanschluss 100. Entsprechend der Darstellung in Figur 5 ist der Vielzweckanschluss 100 in Figur 6 auf Höhe eines ersten Monuments 50 vorgesehen, und Leitungen 161, 162 münden in Leitungen 151, 152 und sind somit zusammen an dem Vielzweckanschluss 100 an systemseitige Leitungen (nicht dargestellt) angeschlossen. Die weiteren Leitungen 161, 162 dienen dem Anschluss des zweiten Monuments 50 (in Figur 6 rechts dargestellt).

Gut zu erkennen ist in Figur 6, dass der Vielzweckanschluss 100 an eine Primärstruktur des Flugzeugs 1 montiert werden kann. Beispielsweise kann die Grundhalterung 110 des Vielzweckanschlusses 100 an mindestens einem Strukturbauteil 2 (in Figur 6 ein oder mehrere Frames/Spante) befestigt werden. In der dargestellten Ausgestaltungsvariante ist die Grundhalterung 110 an einem jeweiligen Ende in Längsrichtung der Grundhalterung 110 betrachtet an einem zugehörigen Frame 2 befestigt, was eine stabile Befestigung des Vielzweckanschlusses 100 bedingt. Dadurch kann der Vielzweckanschluss 100 relativ früh in der Montage des Flugzeugs installiert werden und an systemseitige Leitungen (nicht dargestellt) angeschlossen werden.

Die beiden Monumente 50 können ebenfalls frühzeitig (und außerhalb des Flugzeugs 1) vorgefertigt werden und in schneller und einfacher Weise an den Vielzweckanschluss 100 angeschlossen werden. So können beispielsweise beide Monumente 50 zusammen hergestellt werden und über die Leitungen 161, 162 miteinander verbunden werden. Hierbei kann die Monumentanschlussplatte 130, die in Figur 6 horizontal ausgerichtet ist, bereits an den beiden Monumenten 50 befestigt sein. Anschließend werden beide Monumente 50 zusammen in den Flugzeugrumpf eingebracht, positioniert, befestigt und über den Vielzweckanschluss 100 (genauer gesagt an der zugehörigen Systemanschlussplatte 120) an die Systemleitungen angeschlossen. Alternativ können auch erst die Leitungen 161, 162 mit zwei daran angeschlossenen Vielzweckanschlüssen 100 (genauer gesagt Grundhalterung 110 und Systemanschlussplatte 120) in dem Flugzeug 1 montiert werden. Für den späteren einfacheren Einbau der Monumente 50 sind diese beiden Vielzweckanschlüsse 100 vertikal ausgerichtet. Danach kann jedes der beiden Monumente 50 an einem der beiden vertikalen Vielzweckanschlüsse 100 angeschlossen werden. Genauer gesagt werden zunächst zumindest eine Systemanschlussplatte 120 an dem jeweiligen Ende der Leitungen 161, 162 vorgesehen, während die Monumente 50 mit der zugehörigen Monumentanschlussplatte 130 ausgestattet werden. In Figur 6 ist der Einfachheit halber lediglich die Monumentanschlussplatte 130 dargestellt.

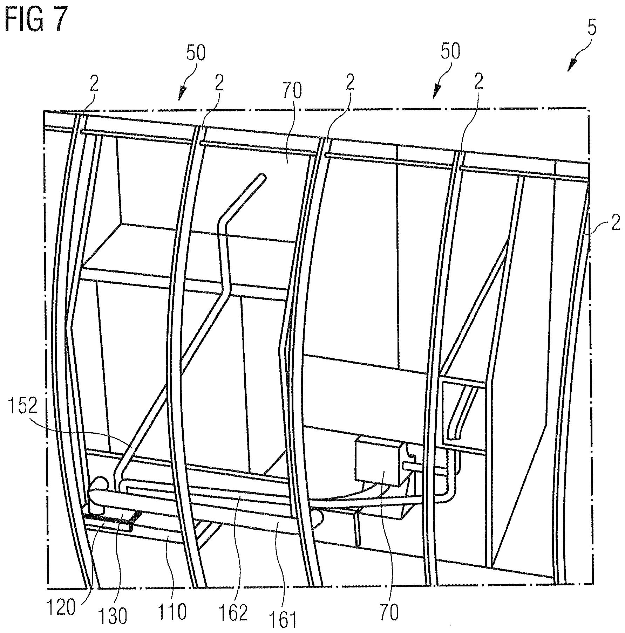

Figur 7 zeigt schematisch eine perspektivische Ansicht eines Flugzeugbereichs 5 mit zwei unterschiedlichen Monumenten und einem Vielzweckanschluss 100. Die in Figur 7 dargestellte Ausgestaltungsvariante entspricht größtenteils der aus Figur 6. Lediglich das in den beiden Figuren links dargestellte Monument 50 wurde ausgetauscht. Hierfür muss lediglich einer der beiden vertikalen Vielzweckanschlüsse 100 geöffnet werden (genauer gesagt dessen Systemanschlussplatte 120 in die Offenstellung bewegt werden), um das zugehörige Monument 50 von den systemseitigen Leitungen zu lösen. Anschließend kann das Monument 50 entfernt werden. In der Zwischenzeit kann ein vorgefertigtes Monument 50, in Figur 7 eine Flugzeug-Galley (Bordküche) in den Bereich der vorher angeordneten Flugzeugtoilette 50 (Figur 6) eingebracht zu werden. Durch Bewegung der Systemanschlussplatte 120 des zugehörigen vertikalen Vielzweckanschlusses 100 in ihre Schliessstellung kann die Bordküche 50 schnell und auf einfache Weise an das Leitungssystem des Flugzeugs 1 angeschlossen werden. Aufgrund der standardisierten Anordnung der Leitungsadapter 121 - 124 der Systemanschlussplatte 120 sowie der Leitungsadapter 131 - 134 der Monumentanschlussplatte 130 müssen keine Veränderungen an den systemseitigen Leitungen vorgenommen werden.

Selbst der Einbau eines unterschiedlich großen Monuments 50 wird durch die Vielzweckanschlüsse erleichtert. Ist beispielsweise die Bordküche 50 (Figur 7) schmäler oder breiter als die vorher montierte Flugzeugtoilette 50 (Figur 6), kann die rechts in den Figuren 6 und 7 dargestellte Flugzeugtoilette 50 von ihrem zugehörigen vertikalen Vielzweckanschluss 100 gelöst werden. Anschließend muss nur die Monumentanschlussplatte 130 der Flugzeugtoilette 50 an eine neue Position des zugehörigen vertikalen Vielzweckanschlusses 100 angepasst werden, sodass weniger oder mehr Raum für die Bordküche 50 (in Längsrichtung des Flugzeugs; X-Achse) geschaffen wird. Die Grundhalterung 110 und Systemanschlussplatte 120 des vertikalen Vielzweckanschlusses 100 für die Flugzeugtoilette 50 (rechts in den Figuren 6 und 7) bleibt dabei unverändert. Beispielsweise kann die Grundhalterung 110 und/oder Systemanschlussplatte 120 dieses vertikalen Vielzweckanschlusses 100 ebenfalls an einem Primärstrukturbauteil 2 des Flugzeugs 1 befestigt werden, wodurch dessen Lage im Flugzeug fest vorgegeben ist.

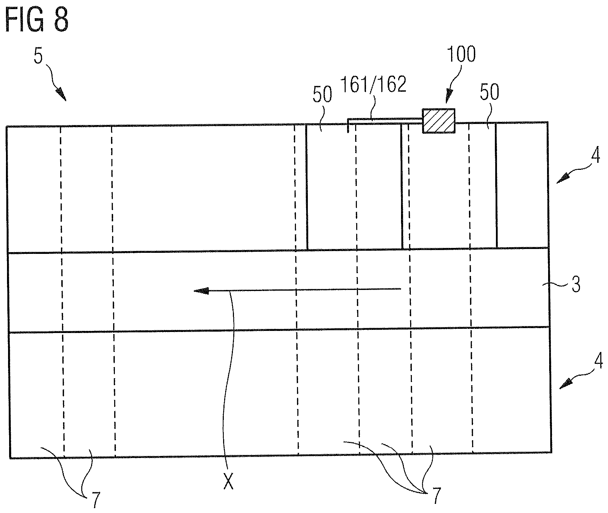

Figur 8 zeigt schematisch eine Aufsicht eines Flugzeugbereichs 5 mit zwei Monumenten 50 und einem Vielzweckanschluss 100. Der Flugzeugbereich 5 weist eine Vielzahl von Bodenelementen 7 auf (in Figur 8 sind lediglich fünf Bodenelemente explizit dargestellt), die quer zu einer Flugzeuglängsrichtung verlegt sind. Die Flugzeuglängsrichtung ist als X-Achse gekennzeichnet. Auf den Bodenelementen 7 können verschiedene Inneneinrichtungsgegenstände des Flugzeugs 1 vorgesehen sein. So können beispielsweise in den Bereichen 4 Passagiersitze (nicht dargestellt), Bordküchen 50, Flugzeugtoilette 50 etc. angeordnet werden. Dazwischen kann ein Gang 3 vorgesehen sein.

Im Randbereich (an einem Ende) eines Bodenelements 7 kann ein Vielzweckanschluss 100 vorgesehen sein. Dabei kann die Grundhalterung 110 und/oder Systemanschlussplatte 120 des Vielzweckanschlusses 100 an einer Primärstruktur des Flugzeugs 1 befestigt sein (in Figur 8 nicht dargestellt). Alternativ kann die Grundhalterung 110 und/oder Systemanschlussplatte 120 des Vielzweckanschlusses 100 in einem der Bodenelemente 7 integriert sein. In jedem Fall dient dieser Vielzweckanschluss 100 dem Anschluss des in Figur 8 rechts dargestellten Monuments 50 an systemseitige Leitungen. Ferner können sprechend den in den Figuren 5 bis 7 dargestellten Implementierungsvarianten zusätzliche Leitungen 161, 162 vorgesehen sein, um ein weiteres Monument 50 (in Figur 8 links von dem ersten Monument 50) an die systemseitigen Leitungen anzuschließen. Wie aus Figur 8 ersichtlich ist, lassen sich die Monumente 50 in einem beliebigen Bereich in Flugzeug Längsrichtung (X-Achse) anordnen und über den in seiner Position (insbesondere in X-Achsen-Richtung) fixierten Vielzweckanschluss 100 schnell und einfach an die systemseitigen Leitungen anschließen.

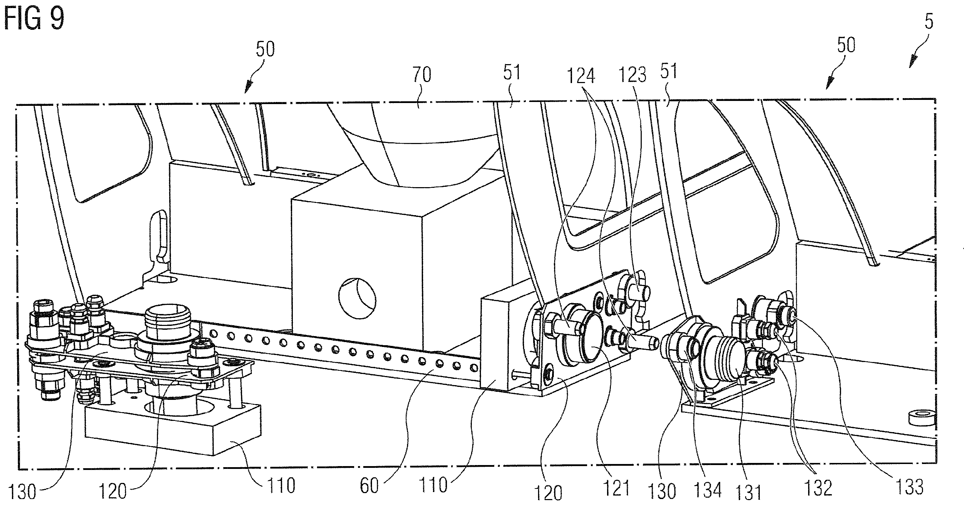

Figur 9 zeigt schematisch eine perspektivische Ansicht eines Flugzeugbereichs 5 mit zwei Monumenten 50 und zwei Vielzweckanschlüssen 100. Der links in Figur 9 dargestellte Vielzweckanschluss 100 entspricht beispielsweise denen aus den Figuren 1 bis 7. Das links in Figur 9 dargestellte Monument weist zusätzlich zu dem horizontal ausgerichteten Vielzweckanschluss 100 (links in Figur 9) einen weiteren Vielzweckanschluss 100 auf. Genauer gesagt weist das in Figur 9 links dargestellte Monument 50 eine Grundhalterung 110 und eine Systemanschlussplatte 120 eines Vielzweckanschlusses 100 auf. Diese sind an einer Seitenwand 51 des Monuments 50 angeordnet oder darin integriert. Hierfür sind sowohl die Grundhalterung 110 als auch die Systemanschlussplatte 120 vertikal ausgerichtet, während die Leitungsadapter 121 - 124 horizontal ausgerichtet sind. Die Leitungsadapter 121 - 124 des vertikal ausgerichteten Vielzweckanschlusses 100 sind mit den Leitungsadaptern 131 - 134 des horizontal ausgerichteten Vielzweckanschlusses 100 (links in Figur 9) verbunden, was in Figur 9 zur einfacheren Darstellung nicht gezeigt ist. Beispielsweise können hier Leitungen 161, 162 entsprechend den in den Figuren 5 bis 8 dargestellten Implementierungsvarianten verlaufen.

Um ein weiteres Monument 50 (rechts in Figur 9 ausschnittsweise dargestellt) an die systemseitigen Leitungen (beispielsweise Leitungen 161, 162) anzuschließen, weist das weitere Monument 50 zumindest eine Monumentanschlussplatte 130 auf. Diese Monumentanschlussplatte 130 ist ebenfalls an einer Seitenwand 51 des weiteren Monuments 50 angeordnet oder darin integriert. Die Leitungsadapter 131 - 134 dieser vertikal ausgerichteten Monumentanschlussplatte 130 korrespondieren in ihrer Lage mit den Leitungsadaptern 121 - 124 der vertikal ausgerichteten Systemanschlussplatte 120 des ersten (in Figur 9 linken) Monuments 50. Alternativ können die Leitungsadapter 131 - 134 auch ohne gesonderte Monumentanschlussplatte 130 in die Seitenwand des Monuments 50 integriert sein. In jedem Fall kann dadurch nach Einbau des ersten Monuments 50 schnell und einfach ein weiteres Monument 50 in das Flugzeug 1 eingebaut werden und über die Leitungsadapter 121 - 124, 131 - 134 der vertikal ausgerichteten Systemanschlussplatte 120 und Monumentanschlussplatte 130 in den jeweiligen Monumenten 50 an die systemseitigen Leitungen angeschlossen werden. Dadurch können die gleichen Bauteile, die für die horizontal ausgerichteten an der Primärstruktur 2 des Flugzeugs 1 befestigten Vielzweckanschlüsse 100 verwendet werden, auch für den Anschluss zwischen zwei Monumenten 50 verwendet werden. Dies reduziert nicht nur die Anzahl der herzustellenden und vorzuhaltenden Bauteile, sondern verringert auch die Anzahl der Arbeitsschritte beim Anschließen zweier Monumente 50 in einem Flugzeug 1.

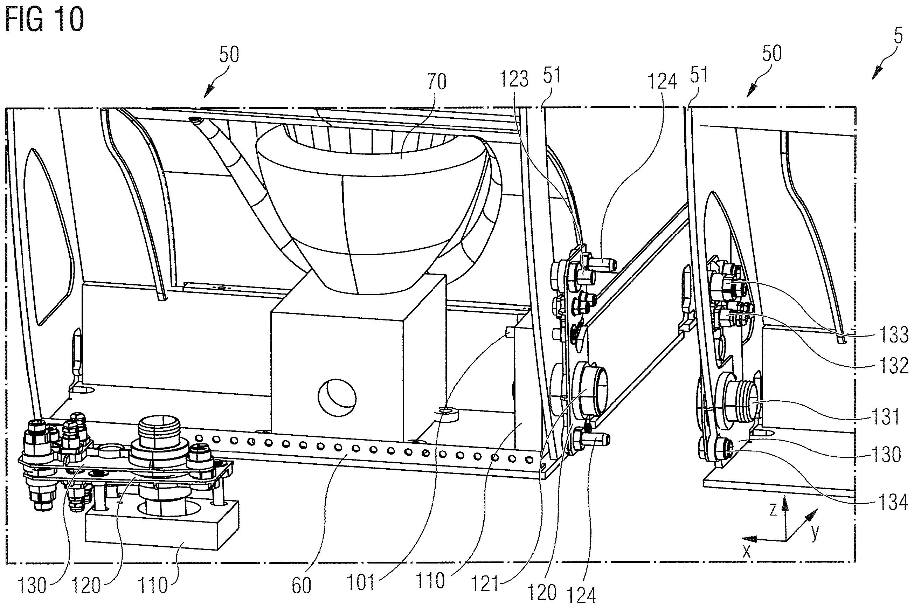

Figur 10 zeigt schematisch eine weitere perspektivische Ansicht eines Flugzeugbereichs 5 mit zwei Monumenten 50 und zwei Vielzweckanschlüssen 100. Die Darstellung der Figur 10 entspricht der aus Figur 9, wobei der vertikal ausgerichtete Vielzweckanschluss 100 zwischen den beiden Monumenten 50 um 90° gedreht ist. Dadurch nimmt der vertikal ausgerichtete Vielzweckanschluss 100 weniger Raum an oder in der Seitenwand 51 in der Tiefenrichtung der Monumente 50 (Y-Achse im eingebauten Zustand im Flugzeug 1) ein. Je nach Monumenttyp kann der vertikal ausgerichtete Vielzweckanschluss 100 in einer beliebigen Position an oder in der Seitenwand 51 angeordnet sein. Zwei miteinander zu verbindende Monumente 50 müssen hierbei lediglich eine entsprechend zueinander ausgerichtete Systemanschlussplatte 120 bzw. Monumentanschlussplatte 130 aufweisen. So muss der vertikal ausgerichtete Vielzweckanschluss 100 nicht notwendigerweise in einer unteren, hinteren Ecke der Seitenwand 51 vorgesehen sein, sondern kann an einer beliebigen Stelle angeordnet sein. Dadurch lassen sich Leitungsführungen zwischen den beiden Monumenten optimieren.

Figur 11 zeigt schematisch ein Flugzeug 1 mit einem Flugzeugbereich 5 mit einem Vielzweckanschluss 100. Der in Figur 11 dargestellte Flugzeugbereich 5 kann jedem der in den Figuren 4 bis 10 beschriebenen Flugzeugbereiche 5 bzw. Monumente 50 entsprechen.

## Patentansprüche

1. Vielzweckanschluss (100) zum Verbinden einer Vielzahl von Leitungen eines Flugzeugmonuments (50), wobei der Vielzweckanschluss (100) umfasst:
eine Grundhalterung (110);
eine Systemanschlussplatte (120), die dazu eingerichtet ist, eine Vielzahl von ersten Leitungsadaptern (121 - 124) aufzunehmen;
eine Monumentanschlussplatte (130), die dazu eingerichtet ist, mindestens einen zweiten Leitungsadapter (131 - 134) aufzunehmen, wobei die Monumentanschlussplatte (130) mit der Grundhalterung (110) einen Raum definiert, in dem die Systemanschlussplatte (120) beweglich angeordnet ist; und
eine Bewegungseinrichtung (105, 108), die dazu eingerichtet ist, die Systemanschlussplatte (120) relativ zu der Grundhalterung (110) und auch relativ zu der Monumentanschlussplatte (130) zwischen einer Offenstellung und einer Schliessstellung zu bewegen,
wobei die Systemanschlussplatte (120) in der Schliessstellung relativ zu der Monumentanschlussplatte (130) so angeordnet ist, dass der mindestens eine zweite Leitungsadapter (131 - 134) der Monumentanschlussplatte (130) mit einem zugehörigen ersten Leitungsadapter (121 - 124) der Systemanschlussplatte (120) wirksam verbunden ist, und in der Offenstellung der Systemanschlussplatte (120) die Vielzahl von ersten Leitungsadaptern (121 - 124) und der mindestens eine zweite Leitungsadapter (131 - 134) voneinander gelöst sind.

2. Vielzweckanschluss (100) gemäß Anspruch 1, wobei die Bewegungseinrichtung (105) eine Gewindespindel (105) und eine Mutter (107), die auf die Gewindespindel (105) aufgeschraubt ist und mit der Systemanschlussplatte (120) verbunden ist, umfasst, wobei eine Drehung der Gewindespindel (105) eine Bewegung der Systemanschlussplatte (120) zwischen der Offenstellung und Schliessstellung bewirkt, oder
wobei die Bewegungseinrichtung (108) einen drehbar gelagerten Hebel (108) umfasst, der mit der Systemanschlussplatte (120) in Wirkverbindung steht, wobei eine Drehung des Hebels (108) eine Bewegung der Systemanschlussplatte (120) zwischen der Offenstellung und Schliessstellung bewirkt.

3. Vielzweckanschluss (100) gemäß Anspruch 1 oder 2, ferner umfassend:
mindestens einen Führungsstift (101), der an einem von der Systemanschlussplatte (120) und der Grundhalterung (110) befestigt ist und an dem anderen von der Systemanschlussplatte (120) und der Grundhalterung (110) gleitend gelagert ist.

4. Vielzweckanschluss (100) gemäß einem der Ansprüche 1 bis 3, wobei jeder Leitungsadapter mindestens eines der Folgenden umfasst:
eine Führungsfläche;
eine Dichtung (201); und
einen elektrischen Kontakt (202).

5. Vielzweckanschluss (100) gemäß einem der Ansprüche 1 bis 4, ferner umfassend:
einen Signalgeber (102), der dazu eingerichtet ist, ein Kontaktsignal zu erzeugen, wenn sich die Systemanschlussplatte (120) in der Offenstellung und/oder Schliessstellung befindet.

6. Flugzeugmonument (50), umfassend:
mindestens einen Vielzweckanschluss (100) gemäß einem der Ansprüche 1 bis 5; und
mindestens eine Leitung (151, 152, 154, 161, 162), wobei jeweils eine Leitung (151, 152, 154, 161, 162) an dem mindestens einen zweiten Leitungsadapter (131 - 134) der Monumentanschlussplatte (130) angeschlossen ist und den zugehörigen zweiten Leitungsadapter (131 - 134) mit einer in dem Flugzeugmonument (50) angeordneten Einrichtung (70) verbindet.

7. Flugzeugmonument (50) gemäß Anspruch 6, ferner umfassend:
mindestens eine Halteeinrichtung (60), die dazu eingerichtet ist, die Monumentanschlussplatte (130) des Vielzweckanschlusses (100) an variablen Positionen zu befestigen.

8. Flugzeugmonument (50) gemäß Anspruch 7, ferner umfassend:
eine Justiereinrichtung (65), die dazu eingerichtet ist, an variablen Positionen an der Halteeinrichtung (60) befestigt zu werden, und ferner dazu eingerichtet ist, die Monumentanschlussplatte (130) an der Justiereinrichtung (65) an variablen Positionen relativ zu der Justiereinrichtung (65) zu befestigen.

9. Flugzeugmonument (50) gemäß einem der Ansprüche 6 bis 8, wobei die Monumentanschlussplatte (130) des mindestens einen Vielzweckanschlusses (100) parallel zu einer Rückwand des Monuments (50) angeordnet ist.

10. Flugzeugmonument (50) gemäß einem der Ansprüche 6 bis 9, ferner umfassend:
eine Grundhalterung (110) und eine Systemanschlussplatte (120) eines weiteren Vielzweckanschlusses (100), wobei die Grundhalterung (110) und die Systemanschlussplatte (120) an oder in einer Seitenwand des Monuments angeordnet sind, oder
eine Monumentanschlussplatte (130) des weiteren Vielzweckanschlusses (100), wobei die Monumentanschlussplatte (130) an oder in einer Seitenwand des Monuments angeordnet ist.

11. Flugzeugmonument (50) gemäß Anspruch 10, umfassend:
mindestens eine Leitung (161, 162), wobei jeweils eine Leitung (161, 162) an dem mindestens einen Leitungsadapter (131 - 134) der Monumentanschlussplatte (130) des weiteren Vielzweckanschlusses (100) angeschlossen ist und den zugehörigen Leitungsadapter (131 - 134) mit einem Leitungsadapter (131 - 134) der Monumentanschlussplatte (130) des Vielzweckanschlusses (100) verbindet.

12. Flugzeugbereich (5), umfassend:
mindestens einen Vielzweckanschluss (100) gemäß einem der Ansprüche 1 bis 5, und/oder mindestens ein Flugzeugmonument (50) gemäß einem der Ansprüche 6 bis 11,
wobei die Grundhalterung (110) des Vielzweckanschlusses (100) an mindestens einem Primärstrukturbauteil (2) des Flugzeugbereichs (5) in einer relativ zu dem Primärstrukturbauteil (2) festen Position angebracht ist.

13. Flugzeugbereich (5) gemäß Anspruch 12, ferner umfassend:
mindestens ein Fußbodenelement (7),
wobei die Grundhalterung (110) und/oder die Systemanschlussplatte (120) des Vielzweckanschlusses (100) unabhängig von dem Fußbodenelement (7) in dem Flugzeugbereich (5) angeordnet ist, oder
wobei die Grundhalterung (110) und/oder die Systemanschlussplatte (120) des Vielzweckanschlusses (100) in das Fußbodenelement (7) integriert ist.

14. Flugzeugbereich (5) gemäß Anspruch 12 oder 13 mit einem Flugzeugmonument (50) gemäß Anspruch 9, wobei die Monumentanschlussplatte (130) so an dem Flugzeugmonument (50) angeordnet ist, dass der mindestens eine Leitungsadapter (131 - 134) der Monumentanschlussplatte (130) und die Vielzahl von Leitungsadaptern (121 - 124)der Systemanschlussplatte (120) des Vielzweckanschlusses (100) in ihrer Lage korrespondieren und die Offenstellung der Systemanschlussplatte (130) einnehmen, wenn das Flugzeugmonument (50) in dem Flugzeugbereich (5) angeordnet und befestigt ist.

15. Flugzeug (1) mit mindestens einem Vielzweckanschluss (100) gemäß einem der Ansprüche 1 bis 5, und/oder mindestens einem Flugzeugmonument (50) gemäß einem der Ansprüche 6 bis 11, und/oder mit mindestens einem Flugzeugbereich (5) gemäß einem der Ansprüche 12 bis 14.

## Claims

1. Multi-purpose connector (100) for connecting a plurality of conduits of an aircraft monster (50), the multi-purpose connector (100) comprising:
a base support (110);
a system connector plate (120) adapted to receive a plurality of first conduit adapters (121 - 124); and
a monument connector plate (130) adapted to receive at least one second conduit adapter (131-134), the monument connector plate (130) defining with the base support (110) a space in which the system connector plate (120) is movably disposed; and
moving means (105, 108) adapted to move the system connector plate (120) relative to the base support (110) and also relative to the monument connector plate (130) between an open position and a closed position,
wherein in the closed position the system connector plate (120) is positioned relative to the monument connector plate (130) such that the at least one second conduit adapter (131-134) of the monument connector plate (130) is operatively connected to an associated first conduit adapter (121-124) of the system connector plate (120), and in the open position of the system connector plate (120) the plurality of first conduit adapters (121-124) and the at least one second conduit adapter (131-134) are disconnected from each other.

2. Multi-purpose connector (100) according to claim 1, wherein said moving means (105) comprises a threaded spindle (105) and a nut (107) threaded onto said threaded spindle (105) and connected to said system connector plate (120), wherein rotation of said threaded spindle (105) causes movement of said system connector plate (120) between said open position and said closed position, or
wherein said moving means (108) comprises a rotatably mounted lever (108) operatively connected to said system connector plate (120), wherein rotation of said lever (108) causes movement of said system connector plate (120) between said open position and said closed position.

3. Multi-purpose connector (100) according to claim 1 or 2, further comprising:
at least one guide pin (101) secured to one of the system connector plate (120) and the base support (110) and slidably mounted to the other of the system connector plate (120) and the base support (110).

4. Multi-purpose connector (100) according to any one of claims 1 to 3, wherein each line adapter comprises at least one of the following:
a guide surface;
a seal (201); and
an electrical contact (202).

5. Multi-purpose connector (100) according to any one of claims 1 to 4, further comprising:
a signal generator (102) adapted to generate a contact signal when the system connector plate (120) is in the open position and/or closed position.

6. Aircraft monument (50) comprising:
at least one multi-purpose connector (100) according to any one of claims 1 to 5; and
at least one conduit (151, 152, 154, 161, 162), wherein each conduit (151, 152, 154, 161, 162) is connected to the at least one second conduit adapter (131 - 134) of the monument connector plate (130) and connects the associated second conduit adapter (131 - 134) to a device (70) disposed in the aircraft monument (50).

7. Aircraft monument (50) according to claim 6, further comprising:
at least one retaining means (60) adapted to secure the monument connector plate (130) of the multi-purpose connector (100) at variable positions.

8. Aircraft monument (50) according to claim 7, further comprising:
an adjustment means (65) adapted to be secured to the support means (60) at variable positions and further adapted to secure the monument connector plate (130) to the adjustment means (65) at variable positions relative to the adjustment means (65).

9. Aircraft monument (50) according to any one of claims 6 to 8, wherein the monument connection plate (130) of the at least one multi-purpose connector (100) is arranged parallel to a rear wall of the monument (50).

10. Aircraft monument (50) according to any one of claims 6 to 9, further comprising:
a base support (110) and a system connector plate (120) of a further multi-purpose connector (100), wherein the base support (110) and the system connector plate (120) are arranged on or in a side wall of the monument, or
a monument connector plate (130) of the further multi-purpose connector (100), the monument connector plate (130) being disposed on or in a side wall of the monument.

11. Aircraft monument (50) according to claim 10, comprising:
at least one conduit (161, 162), each conduit (161, 162) being connected to the at least one conduit adapter (131 - 134) of the monument connector plate (130) of the further multi-purpose connector (100) and connecting the associated conduit adapter (131 - 134) to a conduit adapter (131 - 134) of the monument connector plate (130) of the multi-purpose connector (100).

12. Aircraft region (5) comprising:
at least one multi-purpose connector (100) according to any one of claims 1 to 5, and/or at least one aircraft monument (50) according to any one of claims 6 to 11,
wherein the base support (110) of the multi-purpose connector (100) is attached to at least one primary structural member (2) of the aircraft portion (5) in a fixed position relative to the primary structural member (2).

13. Aircraft region (5) according to claim 12, further comprising:
at least one floor element (7),
wherein the base support (110) and/or the system connector plate (120) of the multi-purpose connector (100) is arranged independently of the floor element (7) in the aircraft section (5), or
wherein the base bracket (110) and/or the system connector plate (120) of the multi-purpose connector (100) is integrated into the floor element (7).

14. Aircraft region (5) according to claim 12 or 13 comprising an aircraft monument (50) according to claim 9, wherein the monument connection plate (130) is arranged on the aircraft monument (50) such, the at least one conduit adapter (131-134) of the monument connector plate (130) and the plurality of conduit adapters (121-124) of the system connector plate (120) of the multi-purpose connector (100) correspond in position and assume the open position of the system connector plate (130) when the aircraft monument (50) is positioned and secured in the aircraft region (5).

15. Aircraft (1) comprising at least one multi-purpose connector (100) according to any one of claims 1 to 5, and/or at least one aircraft monument (50) according to any one of claims 6 to 11, and/or at least one aircraft region (5) according to any one of claims 12 to 14.

## Revendications

1. Connecteur à usages multiples (100) pour connecter une pluralité de conduits d'un monument aéronautique (50), le connecteur à usages multiples (100) comprenant :
un support de base (110) ;
une plaque de connexion de système (120) adaptée pour recevoir une pluralité de premiers adaptateurs de ligne (121 - 124) ;
une plaque de raccordement de monument (130) qui est conçue pour recevoir au moins un deuxième adaptateur de ligne (131 - 134), la plaque de raccordement de monument (130) définissant avec le support de base (110) un espace dans lequel la plaque de raccordement de système (120) est disposée de manière mobile ; et
un dispositif de déplacement (105, 108) adapté pour déplacer la plaque de raccordement de système (120) par rapport au support de base (110) et également par rapport à la plaque de raccordement de monument (130) entre une position ouverte et une position fermée,
dans la position fermée, la plaque de connexion de système (120) est disposée par rapport à la plaque de connexion de monument (130) de telle sorte que le au moins un deuxième adaptateur de ligne (131 - 134) de la plaque de connexion de monument (130) est connecté de manière opérationnelle à un premier adaptateur de ligne associé (121 - 124) de la plaque de connexion de système (120), et dans la position ouverte de la plaque de connexion de système (120), la pluralité de premiers adaptateurs de ligne (121 - 124) et le au moins un deuxième adaptateur de ligne (131 - 134) sont déconnectés les uns des autres.

2. Connecteur à usages multiples (100) selon la revendication 1, dans lequel le dispositif de déplacement (105) comprend une tige filetée (105) et un écrou (107) qui est vissé sur la tige filetée (105) et qui est relié à la plaque de raccordement de système (120), une rotation de la tige filetée (105) provoquant un déplacement de la plaque de raccordement de système (120) entre la position ouverte et la position fermée, ou
le dispositif de déplacement (108) comprenant un levier (108) monté à rotation, qui est en liaison active avec la plaque de raccordement de système (120), une rotation du levier (108) provoquant un déplacement de la plaque de raccordement de système (120) entre la position ouverte et la position fermée.

3. Connecteur à usages multiples (100) selon la revendication 1 ou 2, comprenant en outre :
au moins une broche de guidage (101) fixée à l'un de la plaque de connexion du système (120) et du support de base (110) et montée de manière coulissante sur l'autre de la plaque de connexion du système (120) et du support de base (110).

4. Connecteur à usages multiples (100) selon l'une quelconque des revendications 1 à 3, dans lequel chaque adaptateur de ligne comprend au moins l'un des éléments suivants :
une surface de guidage ;
un joint d'étanchéité (201); et
un contact électrique (202).

5. Connecteur à usages multiples (100) selon l'une des revendications 1 à 4, comprenant en outre :
un générateur de signaux (102) adapté pour générer un signal de contact lorsque la plaque de connexion du système (120) se trouve dans la position ouverte et/ou dans la position fermée.

6. Monument d'aéronef (50), comprenant :
au moins un connecteur polyvalent (100) selon l'une des revendications 1 à 5 ; et
au moins une ligne (151, 152, 154, 161, 162), une ligne (151, 152, 154, 161, 162) à la fois étant connectée à l'au moins un deuxième adaptateur de ligne (131-134) de la plaque de connexion de monument (130) et connectant le deuxième adaptateur de ligne (131-134) associé à un dispositif (70) disposé dans le monument d'avion (50).

7. Monument d'aéronef (50) selon la revendication 6, comprenant en outre :
au moins un dispositif de retenue (60) adapté pour fixer la plaque de connexion de monument (130) du connecteur à usages multiples (100) dans des positions variables.

8. Monument d'aéronef (50) selon la revendication 7, comprenant en outre :
un dispositif d'ajustement (65) adapté pour être fixé à des positions variables sur le dispositif de support (60), et adapté en outre pour fixer la plaque de borne de monument (130) sur le dispositif d'ajustement (65) à des positions variables par rapport au dispositif d'ajustement (65).

9. Monument d'aéronef (50) selon l'une quelconque des revendications 6 à 8, dans lequel la plaque de connexion de monument (130) de l'au moins un port polyvalent (100) est disposée parallèlement à une paroi arrière du monument (50).

10. Monument d'aéronef (50) selon l'une quelconque des revendications 6 à 9, comprenant en outre :
un support de base (110) et une plaque de connexion système (120) d'un autre port polyvalent (100), le support de base (110) et la plaque de connexion système (120) étant disposés sur ou dans une paroi latérale du monument, ou
une plaque de connexion de monument (130) de l'autre connexion polyvalente (100), la plaque de connexion de monument (130) étant disposée sur ou dans une paroi latérale du monument.

11. Monument d'aéronef (50) selon la revendication 10, comprenant:
au moins une ligne (161, 162), une ligne (161, 162) étant respectivement connectée à l'au moins un adaptateur de ligne (131 - 134) de la plaque de connexion de monument (130) de l'autre connexion polyvalente (100) et connectant l'adaptateur de ligne associé (131 - 134) à un adaptateur de ligne (131 - 134) de la plaque de connexion de monument (130) de la connexion polyvalente (100).

12. Zone d'aéronef (5) comprenant :
au moins un connecteur polyvalent (100) selon l'une des revendications 1 à 5, et/ou au moins un monument d'aéronef (50) selon l'une des revendications 6 à 11,
Dans lequel le support de base (110) du connecteur polyvalent (100) est monté sur au moins un élément de structure primaire (2) de la zone d'aéronef (5) dans une position fixe par rapport à l'élément de structure primaire (2).

13. Zone d'aéronef (5) selon la revendication 12, comprenant en outre :
au moins un élément de plancher (7),
dans lequel le support de base (110) et/ou le panneau de connexion de système (120) du connecteur à usages multiples (100) est disposé dans la zone d'aéronef (5) indépendamment de l'élément de plancher (7), ou
dans lequel le support de base (110) et/ou la plaque de connexion de système (120) du connecteur à usages multiples (100) est intégré dans l'élément de plancher (7).

14. Zone d'aéronef (5) selon la revendication 12 ou 13 avec un monument d'aéronef (50) selon la revendication 9, dans laquelle la plaque de connexion de monument (130) est disposée sur le monument d'aéronef (50) de manière à , de sorte que le au moins un adaptateur de ligne (131 - 134) de la plaque de connexion de monument (130) et la pluralité d'adaptateurs de ligne (121 - 124) de la plaque de connexion de système (120) du connecteur à usages multiples (100) correspondent en position et prennent la position ouverte de la plaque de connexion de système (130) lorsque le monument d'avion (50) est placé et fixé dans la zone d'avion (5).

15. Aéronef (1) comprenant au moins un port polyvalent (100) selon l'une des revendications 1 à 5, et/ou au moins un monument d'aéronef (50) selon l'une des revendications 6 à 11, et/ou comprenant au moins une zone d'aéronef (5) selon l'une des revendications 12 à 14.
